# EUROPEAN PATENT APPLICATION

(11) **EP 4 851 966 A1**
(43) Date of publication of application: **09.12.2026**
(21) Application number: 25180148.6
(22) Date of filing: 02.06.2025
(51) Int. Cl.: G08G 1/01, B60W 30/18, B60W 60/00, G05D 1/617, G05D 1/648, G05D 1/69, G08G 1/0967, G08G 1/0968, G08G 1/00, E01H 10/00

(54) **SLIPPAGE-BASED MATERIAL HANDLING MACHINE FLEET CONTROL**

(71) Applicant: Volvo Truck Corporation, 405 08 Göteborg (SE)
(72) Inventor: HARJU, Roberth, VÄXJÖ (SE); LAINE, Leo, GÖTEBORG (SE); HENDERSON, Leon, HÄRRYDA (SE); WILHELMSSON, Martin, TORSLANDA (SE); KVIST, Roland, BRAÅS (SE)
(74) Representative: Ström & Gulliksson AB

(57) **Abstract**

A computer system (100; 400) for controlling a fleet (1) of material handling machines (10) operating at a site (20) along a work cycle (26), the computer system (100; 400) comprising processing circuitry (102; 402) configured to determine a first slippage condition of at least one material handling machine (10) in the fleet (1) operating at a road portion (24) of the work cycle (26); in response to the first slippage condition indicating that at least one tire (5) of the at least one material handling machine (10) experiences slippage against the road portion (24), control an application of a friction-enhancing material on said road portion (24); determine a second slippage condition of the same at least one material handling machine (10) operating at the same road portion (24) after said friction-enhancing material being applied thereto; and control the fleet (1) based on the second slippage condition.

## Description

### TECHNICAL FIELD

The disclosure relates generally to material handling machines. In particular aspects, the disclosure relates to slippage-based material handling machine fleet control. The disclosure can be applied to material handling machines, such as dump trucks, haulers, loaders, graders, and backhoes, among other vehicle types. Although the disclosure may be described with respect to a particular vehicle, the disclosure is not restricted to any particular vehicle.

### BACKGROUND

In modern industrial operations, the control and management of a fleet of material handling machines, such as automated dump trucks, are used for ensuring efficiency and safety. These machines operate within a structured work cycle, repeatedly traversing a predetermined route. The primary goal in these settings is to improve productivity without compromising safety.

The present inventors are herein presenting improvements relating to productivity and safety in material handling machine fleet management.

### SUMMARY

Achieving desirable productivity and safety in this technical area is intricately linked to tire-to-ground friction levels. One of the primary challenges faced by these operations is the dynamic nature of track conditions. Factors such as rain, snow, and varying temperatures influence the friction between the tires and the road surface. Additionally, the unpredictability of repeated traversals by heavy trucks, compounded by heavy traffic and uneven terrain, can degrade the road surface, creating deep ruts and uneven track marks. These conditions further complicate the maintenance of appropriate friction levels, as they can diminish grip. When the friction falls below an acceptable threshold, the risk of machines losing control increases, leading to potential accidents and operational disruptions.

Current fleet control systems often fail to adequately address these challenges. Many existing solutions lack the capability to adapt in real-time to changing road conditions. For instance, they may not provide timely updates regarding friction levels or fail to integrate environmental data into their operational decisions. Consequently, these systems may either slow down operations unnecessarily, limiting productivity, or maintain speeds that are unsafe given the decreased friction, thereby elevating the risk of slippage and accidents. Furthermore, prior art solutions are often rigid, relying on predetermined schedules and static parameters that do not account for the nuanced and fluctuating nature of real-world environments. Consequently, they are ill-equipped to accommodate the continuous variability in road conditions caused by both weather phenomena and the degradation of road surfaces due to repeated heavy usage. This inflexibility not only compromises safety but also results in inefficiencies and increased operational costs.

Given these inadequacies, there is a need for improved fleet control systems that can dynamically respond to environmental changes, improving both safety and productivity. Such advancements would ensure that material handling machines can continue to operate at desirable speeds while maintaining control, thereby enhancing the overall efficiency of industrial operations.

In a first aspect of the disclosure there is accordingly provided a computer system for controlling a fleet of material handling machines operating at a site along a work cycle. The computer system comprises processing circuitry configured to determine a first slippage condition of at least one material handling machine in the fleet operating at a road portion of the work cycle; in response to the first slippage condition indicating that at least one tire of the at least one material handling machine experiences slippage against the road portion, control an application of a friction-enhancing material on said road portion; determine a second slippage condition of the same at least one material handling machine operating at the same road portion after said friction-enhancing material being applied thereto; and control the fleet based on the second slippage condition.

The first aspect of the disclosure may seek to address the challenge of maintaining fleet efficiency and safety amidst varying road conditions caused by both environmental factors, such as rain and snow, and the degradation of road surfaces from repeated heavy usage. A technical benefit may include providing a robust solution by enabling quick detection and response to changing friction levels, thereby preventing loss of control, improving efficiency, and enhancing safety.

Optionally in some examples, including in at least one preferred example, wherein in response to the second slippage condition indicating that at least one tire of the at least one material handling machine no longer experiences slippage against the road portion, the processing circuitry is configured to control the fleet to increase a current travelling speed. A technical benefit may include enhancing operational efficiency by improving the speed of the fleet once stability is regained.

Optionally in some examples, including in at least one preferred example, wherein in response to the second slippage condition indicating that at least one tire of the at least one material handling machine experiences slippage against the road portion, the processing circuitry is configured to control the fleet to reduce a current travelling speed, or halt operations. A technical benefit may include increasing safety by preventing accidents through timely reduction of speed or cessation of movement when slippage is detected.

Optionally in some examples, including in at least one preferred example, wherein in response to the second slippage condition indicating that at least one tire of the at least one material handling machine experiences slippage against the road portion, the processing circuitry is configured to control the fleet by increasing a current friction value of at least one tire of said at least one material handling machine, wherein increasing the current friction value comprising performing one or more of a suspension setting adjustment, and a torque distribution regulation. A technical benefit may include improving traction and control by mechanically adjusting the machine to better handle adverse conditions.

Optionally in some examples, including in at least one preferred example, wherein in response to the second slippage condition indicating that at least one tire of the at least one material handling machine experiences slippage against the road portion, the processing circuitry is configured to control the fleet by controlling a reapplication of the friction-enhancing material on the same road portion. A technical benefit may include maintaining consistent traction by ensuring that the road surface is kept at desirable friction levels through repeated applications.

Optionally in some examples, including in at least one preferred example, wherein in response to the second slippage condition indicating that at least one tire of the at least one material handling machine experiences slippage against the road portion, the processing circuitry is configured to control the fleet by causing it to perform a travelling maneuver, the travelling maneuver comprising one or more of a travel to a location outside the work cycle, and a reversal of a travelling direction in the work cycle. A technical benefit may include providing strategic flexibility in operations by allowing the fleet to avoid problematic areas or adjust travel paths as needed.

Optionally in some examples, including in at least one preferred example, wherein in response to the second slippage condition indicating that at least one tire of the at least one material handling machine experiences slippage against the road portion, the processing circuitry is configured to control the fleet by adapting the work cycle, comprising one or more of omitting a road portion from the work cycle, including a road portion to the work cycle, and making changes to an existing road portion of the work cycle. A technical benefit may include improving operational efficiency and safety by dynamically altering the work cycle to account for changing conditions.

Optionally in some examples, including in at least one preferred example, wherein the processing circuitry is further configured to obtain topography data of the work cycle; and control the fleet based on the topography data, said topography data-based control comprising a specific operating pattern while the fleet is operating at road portions associated with different inclinations. A technical benefit may include improving performance by tailoring operations to the specific topographical challenges of different road portions.

Optionally in some examples, including in at least one preferred example, wherein the processing circuitry is configured to control the application of the friction-enhancing material by one or more of controlling a friction fighting system mounted to one or more of the material handling machines, and controlling a friction fighting system mounted to a friction fighting machine operating with the fleet or independently of the fleet. A technical benefit may include increasing operational versatility by allowing for different configurations of friction-fighting systems to be employed as needed.

Optionally in some examples, including in at least one preferred example, wherein the processing circuitry is configured to determine the first and second slippage conditions by controlling said at least one material handling machine to drive both its steering axles while allowing a first axle to freewheel; and applying a negative torque to the first axle to identify a point at which slippage occurs. A technical benefit may include enhancing accuracy and reliability by employing precise mechanical methods to detect and assess slippage conditions.

In a second aspect of the disclosure there is provided a material handling machine comprising the computer system of the first aspect.

The second aspect of the disclosure may seek to address the challenge of maintaining fleet efficiency and safety amidst varying road conditions caused by both environmental factors, such as rain and snow, and the degradation of road surfaces from repeated heavy usage, for one machine. A technical benefit may include providing a robust solution by enabling quick detection and response to changing friction levels, thereby preventing loss of control, improving efficiency, and enhancing safety.

In a third aspect of the disclosure there is provided a fleet comprising a plurality of material handling machines according to the second aspect.

The third aspect of the disclosure may seek to address the challenge of maintaining fleet efficiency and safety amidst varying road conditions caused by both environmental factors, such as rain and snow, and the degradation of road surfaces from repeated heavy usage, for a fleet of machines. A technical benefit may include providing a robust solution by enabling quick detection and response to changing friction levels, thereby preventing loss of control, improving efficiency, and enhancing safety.

In a fourth aspect of the disclosure there is provided a computer-implemented method for controlling a fleet of material handling machines operating at a site along a work cycle. The method comprises determining by processing circuitry of a computer system, a first slippage condition of at least one material handling machine in the fleet operating at a road portion of the work cycle; in response to the first slippage condition indicating that at least one tire of the at least one material handling machine experiences slippage against the road portion, controlling by the processing circuitry, an application of a friction-enhancing material on said road portion; determining by the processing circuitry, a second slippage condition of the same at least one material handling machine operating at the same road portion after said friction-enhancing material being applied thereto; and controlling by the processing circuitry, the fleet based on the second slippage condition.

The fourth aspect of the disclosure may seek to address the challenge of maintaining fleet efficiency and safety amidst varying road conditions caused by both environmental factors, such as rain and snow, and the degradation of road surfaces from repeated heavy usage. A technical benefit may include providing a robust solution by enabling quick detection and response to changing friction levels, thereby preventing loss of control, improving efficiency, and enhancing safety.

In a fifth aspect of the disclosure there is provided a computer program product comprising program code for performing, when executed by the processing circuitry, the method of the fourth aspect.

The fifth aspect of the disclosure may seek to enable new material handling machines and/or legacy material handling machines to be conveniently configured, by software installation/update, to address the challenge of maintaining fleet efficiency and safety amidst varying road conditions caused by both environmental factors, such as rain and snow, and the degradation of road surfaces from repeated heavy usage. A technical benefit may include providing a robust solution by enabling quick detection and response to changing friction levels, thereby preventing loss of control, improving efficiency, and enhancing safety.

In a sixth aspect of the disclosure there is provided a non-transitory computer-readable storage medium comprising instructions, which when executed by the processing circuitry, cause the processing circuitry to perform the method of the fourth aspect.

The sixth aspect of the disclosure may seek to enable new material handling machines and/or legacy material handling machines to be conveniently configured, by software installation/update, to address the challenge of maintaining fleet efficiency and safety amidst varying road conditions caused by both environmental factors, such as rain and snow, and the degradation of road surfaces from repeated heavy usage. A technical benefit may include providing a robust solution by enabling quick detection and response to changing friction levels, thereby preventing loss of control, improving efficiency, and enhancing safety.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary material handling machine according to an example.
**FIG. 2** is an site where a fleet of material handling machines operate in a work cycle according to an example.
**FIG. 3** is a flowchart of an exemplary method for controlling a fleet of material handling machines according to an example.
**FIG. 4** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

The present disclosure aims to address the challenge of maintaining fleet efficiency and safety amidst varying road conditions caused by both environmental factors, such as rain and snow, and the degradation of road surfaces from repeated heavy usage. An initial slippage condition is determined for one or more material handling machines operating along a work cycle. Upon detecting slippage, the application of a friction-enhancing material is triggered on the affected road portion. Subsequently, the slippage condition is reassessed to ensure the issue is resolved and fleet operations are controlled accordingly. Features of this disclosure collectively offer a robust solution by allowing for real-time detection and response to changing friction levels, thereby preventing loss of control and enhancing safety. A feedback loop is provided that can ensure continuous monitoring and dynamic adjustment, enabling machines to maintain desirable speed and productivity.

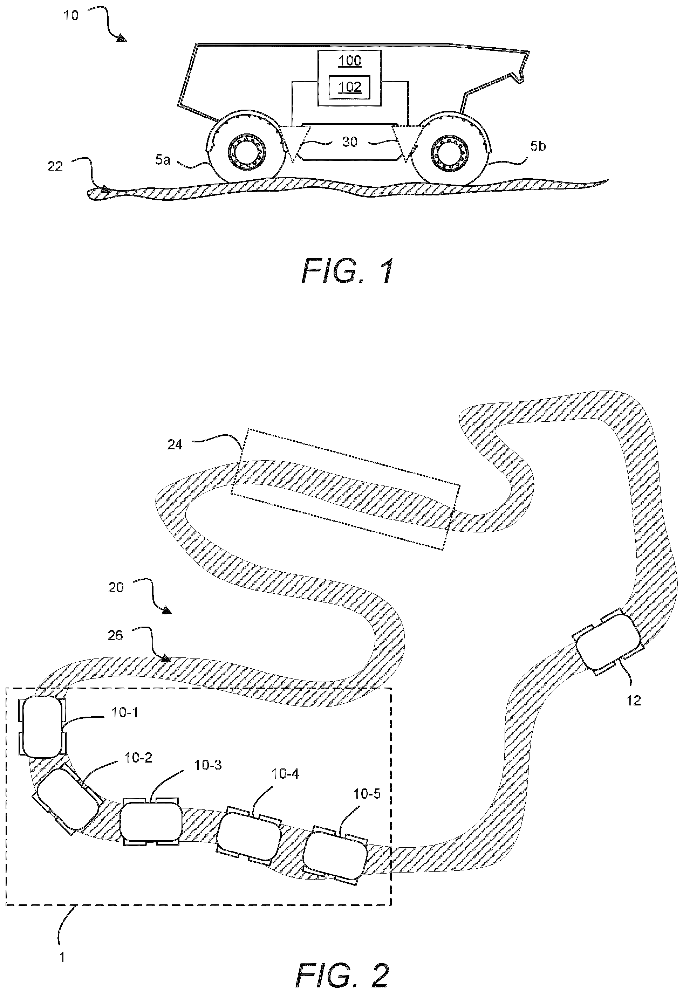

**FIG. 1** is a schematic illustration of an exemplary material handling machine **10** (machine **10** in short) driving on the ground **22.** The machine **10** is a movable construction equipment, such as a dump truck, hauler, loader, grader, backhoe, among other vehicle types. The machine **10** is typically operating autonomously. While not shown in **FIG. 1****,** the machine **10** operates in a fleet involving a plurality of such machines **10.** This allows the machines **10** to be controlled together to perform complementary tasks to reduce operational downtime.

Attached to the machine **10** are tires **5** including pairs **5a** (front pair) and **5b** (rear pair), each connected to their respective axles. These tires **5** interact directly with the ground **22,** providing the necessary traction for movement. Although the tires **5** are designed to handle heavy loads and challenging conditions typical in construction environments, they can experience slippage due to several factors. Uneven terrain, such as loose gravel or soft soil, can reduce the friction between the tires **5** and the ground **22,** leading to a loss of traction. Additionally, environmental conditions like rain or snow can create slippery surfaces, further diminishing grip. Heavy loads carried by the machine **10** also increase the pressure on the tires **5,** potentially increasing slippage on weak or unstable ground. Further, the quality of the tires **5,** such as the depth of tread, can degrade over time with use, leading to diminished traction. The dynamic nature of construction sites, with constant changes in surface conditions, requires the tires **5** to continuously adapt to maintain traction. Addressing slippage is therefore a main focus of this disclosure in order to prevent operational disruptions and ensure safe and efficient movement of the machines **10.**

To address the slippage concern, the machine **10** comprises a computer system 100 with processing circuitry **102** configured to determine slippage conditions, control the application of friction-enhancing material based thereon, and control the fleet of machines **10** accordingly. The processing circuitry **102** can be arranged in a single machine **10** or in a plurality of machines **10** of the fleet. In some installations parts of the processing circuitry **102** are arranged in a work station associated with a worksite where the fleet operates, while other parts of the processing circuitry **102** are arranged in one or more of the machines **10.** In other installations parts of the processing circuitry **102** are arranged remote from the worksite, such as in a remote server, and other parts in one or more machines **10.**

The friction-enhancing material is a substance specifically designed to increase the coefficient of friction between the tires **5** of the machine **10** and the ground **22** over which it travels. This material aims to improve traction, particularly in adverse conditions where the ground **22** may be slippery or uneven. The friction-enhancing material may include substances like sand, gravel, or specialized chemical compounds. Sand and gravel work by providing a gritty surface that increases contact friction, effectively embedding themselves into soft or loose terrain to create a more stable surface. Chemical compounds used as friction enhancers often contain mixtures that can bond to the road surface, creating a textured layer that improves grip. These compounds may be designed to react with moisture, forming a textured surface that mitigates the slickness caused by rain or ice.

The machine **10** may further comprise a friction-fighting system **30.** The friction-fighting system **30** can mounted to the machine **10** as seen in **FIG. 1****,** or be mounted to a separate friction-fighting machine operable either independently from or dependent with the fleet. The friction-fighting machine operates along the same route as the fleet, dedicated solely to applying friction-enhancing material to the ground **22.** This machine could be a variant of the machine **10,** for example a lighter version to reduce impact on the surface. The friction-fighting machine is also movable. The friction-fighting system **30,** mounted on this machine, can be managed by the processing circuitry **102** from the machine **10.** This is achieved through operative communication between the processing circuitry **102** of machine **10** and the processing circuitry of the friction-fighting system **30,** allowing control regardless of where the friction-fighting system **30** is mounted.

The friction-fighting system **30** may include one or more automated dispensers configured to release materials on the ground **22** where slippage is detected. Alternatively, the friction-fighting system **30** could involve a sprayer system that applies a chemical solution to create a more textured surface, improving grip in wet conditions.

The friction-fighting system **30** is capable of applying friction-enhancing materials directly onto the ground **22** based on computer control from the processing circuitry **102.** Such application control refers to a deliberate management of deploying friction-enhancing materials to improve traction. Instructions sent from the processing circuitry **102** to the friction-fighting system **30** may include one or more of a material type indicator, a material amount indicator, and an application location indicator.

The material type indicator specifies the kind of friction-enhancing material to be used. For instance, the processing circuitry **102** might instruct the friction-fighting system **30** to apply sand for icy conditions or a chemical compound for wet surfaces. This indicator can ensure that the most effective material is selected based on prevailing conditions, improving traction.

The material amount indicator determines how much friction-enhancing material should be applied. For example, the processing circuitry **102** may instruct the system to dispense a larger quantity of material on particularly slippery sections of the route, sections of the route associated with inclinations that exceed a limit value. Conversely, less amount of material may suitably be used in areas where traction is relatively stable. This precise control helps to conserve resources while improving effectiveness.

The application location indicator directs where the friction-enhancing material should be applied. The processing circuitry **102** may specify particular segments of the route that require treatment, such as steep inclines or sharp turns. The location can be a specific point along the route, or segment of a certain length along the route. By targeting specific locations, the processing circuitry **102** makes sure that the material is used where it is needed most.

**FIG. 2** shows an exemplary work cycle **26** of a site **20** where a fleet **1** of any suitable number of machines, here five machines **10-1** through **10-5,** operate. A separate friction-fighting machine **12** also operates along the work cycle **26** independent of the fleet **1** in this particular example. The site **20** is typically an outdoor environment characterized by rough terrain, such as a quarry, construction site, or logging area. These sites may feature uneven ground, loose gravel, or mud, posing challenges for maintaining traction.

The work cycle **26** refers to a repetitive sequence of operations that the fleet **1** of material handling machines **10** undertake at the site **20.** This work cycle **26** encompasses the process from loading materials at a designated location, transporting them along a predetermined route, and unloading them at a specific destination. The work cycle **26** includes a plurality of road portions **24** being segments of this route, which can vary in length and complexity, depending on the layout and operational requirements of the site **20.** Road portions **24** selected along the work cycle **26** directly impacts the efficiency and safety of operations. Its condition can vary due to weather, frequent use, or changes in the terrain, warranting monitoring and adaptation to maintain desirable performance.

For instance, a work cycle **26** at a mining site might involve machines **10** traveling several kilometers from the excavation point to a processing area, navigating inclines and declines along the way. Alternatively, in a construction site within an urban setting, the work cycle **26** could be shorter, involving maneuvering through tighter spaces and around obstacles. The work cycle **26** can change over time as project phases shift or as the location of loading and unloading areas is altered.

The way the fleet **1** is controlled according to teachings of this disclosure involves four main steps: (i) determining a first slippage condition, (ii) control the application of friction-enhancing material, (iii) determine a second slippage condition, and (iv) controlling the fleet based on the outcome of the second slippage condition. These steps will now be described in detail.

The first step is to determine a first slippage condition of at least one of the machines **10** in the fleet **1** while it operates along a road portion **24** of the work cycle **26.** This road portion **24** can be anywhere along the work cycle **26,** and is in this particular example marked out where the first machine **10-1** is located. Any number of machines **10** of the fleet **1** could in theory be located along this road portion **24,** not just one. The term "first" is used to specify the initial slippage condition determined before any friction-enhancing material is applied, or sometimes after the fleet control is carried out and a re-assessment is made based on updated terrain conditions. This distinction sets a baseline for assessing the effectiveness of the intervention. Once the friction-enhancing material is applied (or optionally re-applied), a "second" slippage condition is determined to evaluate changes in traction compared to the first condition, and ensure that the application has successfully improved the situation. By using "first", it clearly differentiates the initial assessment from subsequent evaluations, allowing for a systematic approach to monitoring and adjusting operational conditions.

The slippage condition refers to the status of tire traction on the ground **22,** indicating whether the tires **5** of a machine **10** are slipping or maintaining grip. While it can be represented as a binary indicator (e.g., "SLIPPAGE" or "NOT SLIPPAGE"), it may include more detailed metadata. This additional information may encompass which tire **5** is experiencing slip, to which extent the tires **5** slip, the specific conditions contributing to the slippage, such as surface type or weather, and the impact on the operational efficiency of the machine **10.** The slippage condition helps inform decisions on interventions to improve safety and performance.

The slippage condition can be determined by comparing the actual performance of the tires **5** with expected outcomes. For instance, sensors may track the rotational speed of the tires **5** and compare it to the forward movement of the machine **10.** A discrepancy here could suggest slippage. Detailed metadata can include the specific tire **5** experiencing slippage, the degree of slippage indicated by the difference in expected vs. actual traction, and contributing factors like surface type, weather conditions, or load weight.

The slippage condition may be determined by way of actively managing the axles of the machine(s) **10.** The processing circuitry **102** is configured to control the material handling machine **10** by driving both steering axles while allowing the first axle (any of the axles) to freewheel. This means that the first axle moves without being powered, providing a baseline for detecting slippage. This can be done by way of deliberate control or as a consequence of normal operation.

To pinpoint where slippage occurs, the processing circuitry **102** applies a negative torque to the first axle. This negative torque deliberately reduces the rotational force, making it easier to detect when the tires **5** begin to lose grip and slip. By identifying the exact point of slippage, the processing circuitry **102** can assess the road conditions and make informed decisions about applying friction-enhancing materials or adjusting operational parameters to improve traction.

Other methods to determine whether slippage is occurring may involve using sensors to monitor tire rotation speed discrepancies, deploying gyroscopic sensors to detect lateral movement, and/or utilizing accelerometers to measure unexpected deceleration or acceleration patterns.

The processing circuitry **102** may be configured to determine the first slippage condition based on specific triggers, including weather condition changes, timing schedule, introduction or removal of machines **10** in the fleet **1,** or a termination of an operational halt.

In examples where the trigger is a weather condition change, this may be based on obtained environmental data, such as data obtained from onboard sensors, weather stations, remote sensing technology, or the like. Weather can significantly affect traction; for instance, rain or snow can create slippery surfaces, while temperature changes can impact road texture. By responding to these changes, the processing circuitry **102** can proactively manage slippage conditions, applying friction-enhancing materials or adjusting machine operations to mitigate risks before they escalate.

In examples where the trigger is a predetermined timing schedule, this can ensure regular assessments of slippage conditions. A predetermined timing schedule might involve assessing slippage conditions every two hours (or other suitable timing aspects) during operations or conducting evaluations at the start and end of each shift to ensure consistent traction monitoring. By systematically evaluating traction at set intervals, the processing circuitry **102** helps maintain consistent operational safety and efficiency, preventing unexpected slippage issues from arising due to overlooked conditions.

The introduction of a material handling machine **10** into the fleet **1** can also prompt a slippage condition check. Adding machines **10** can change the load distribution and dynamics within the fleet **1,** potentially impacting traction. By assessing slippage conditions upon introduction, the processing circuitry **102** can adjust operations to accommodate the new configuration. Similarly, the removal of a material handling machine **10** from the fleet **1** can initiate a slippage condition check. Removing machines **10** alters the fleet dynamics and load balance, which can affect traction in unexpected ways.

Finally, the determination is conducted after the termination of an operational halt. Resuming operations after a pause may introduce new traction challenges, such as changes in road conditions during the downtime. Assessing the slippage condition ensures that the fleet can restart safely and effectively, adapting to any variations encountered during the halt.

The second step is to control an application of a friction-enhancing material on the road portion **24.** This is done in response to the first slippage condition indicating that a tire **5** experiences slippage against the road portion **24.** This means that the processing circuitry **102** actively processes the first slippage condition by analyzing data to determine whether slippage is occurring. Once it is confirmed that a tire **5** is experiencing slippage on a specific road portion **24,** the friction-enhancing material is applied on that same road portion **24.** This targeted approach ensures that the material is applied where it is most needed, directly addressing the problematic area to improve traction. This may be done according to methods discussed above, such as using the friction-fighting system **30** of the friction-fighting machine **12** or of any of the machines **10.**

The application of friction-enhancing material is not limited to the same machine **10** that experienced the slippage. Instead, it can be performed by any machine **10** in the fleet **1** or by the dedicated friction-fighting machine **12.** This versatility ensures that even if the machine (in this case the machine **10-1**) that initially encountered the slippage has moved on or does not return to the affected road portion **24** until the next iteration of the work cycle **26,** the problem area can still be addressed promptly for the next machines **10** (such as the machine **10-2**). Applying the material on the same road portion **24** is therefore beneficial because other machines in the fleet **1** may encounter similar slippage issues due to having the same type of tires **5** and operating on the same terrain. By applying the material in this manner, the processing circuitry **102** not only rectifies the immediate traction issue but also preemptively enhances conditions for the entire fleet, promoting consistent safety and efficiency across operations.

The third step involves determining a second slippage condition for the same machine **10** at the same road portion **24** after applying friction-enhancing material. This assessment can be carried out using similar approaches to how the first slippage condition was determined. The determination can occur immediately or shortly after application. By comparing the new data with the initial slippage condition, the processing circuitry **102** verifies traction improvements by checking for reduced discrepancies between expected and actual tire performance. If the machine **10** completes another iteration of the work cycle **26** and returns to the same road portion **24,** or assesses while still present on the same road portion **24,** it evaluates consistent traction over time. This approach ensures that any necessary adjustments can be made, confirming whether conditions have improve.

The fourth step involves controlling the fleet **1** based on the second slippage condition. By analyzing the second slippage condition, the processing circuitry **102** can make a variety of informed decisions that will be discussed hereinbelow in more detail. After the fleet control has been carried out, the process may continue one or more times from the first step, effectively forming a feedback loop where a new first slippage condition can be determined. This iterative process can be repeated as necessary to achieve an optimal balance between safety and operational efficiency. By continuously monitoring and responding to traction issues, the processing circuitry **102** ensures that the fleet adapts dynamically to changing conditions, maintaining performance and reducing risks associated with slippage. This cycle of assessment, intervention, and reevaluation aims to sustain effective fleet management over time.

In some examples, the fleet control is a speed increase, which can be done when the second slippage condition indicates that at least one tire **5** of the material handling machine **10** no longer experiences slippage on the road portion **24.** This signifies that the traction has improved due to the application of the friction-enhancing material. In response to this positive outcome, the processing circuitry **102** can increase the current traveling speed of the fleet **1.** The capacity to increase speed means the fleet **1** can operate more efficiently and increase productivity when conditions allow. The speed increase can be implemented in various ways, such as incrementally-for example by 1 km/h in multiple increments-to cautiously test the improved traction, or in a single adjustment-such as a 10 km/h increase-if the conditions are deemed stable enough to support a larger change. The decision on how much to increase the speed depends on the assessment of the second slippage condition, considering factors like the stability of the improved traction and the uniformity of conditions across the fleet **1.**

In some examples, the fleet control is a decrease increase, which can be done when the second slippage condition indicates that at least one tire **5** of the material handling machine **10** continues to experience slippage on the road portion **24.** This finding suggests that the traction issue has not been fully resolved despite the application of the friction-enhancing material. In response to this ongoing slippage, the processing circuitry **102** is configured to reduce the current traveling speed of the fleet **1.** Slowing down the fleet aims to maintain control and safety, as lower speeds reduce the risk of accidents and allow more time for corrective measures. The reduction in speed can be adjusted in various ways. It might be implemented incrementally-for example, by decreasing speed by 1 km/h in steps to cautiously regain control-or through a more significant reduction, such as 10 km/h in one adjustment, if the slippage conditions are more severe. The decision on how much to reduce the speed is informed by the specific details of the second slippage condition, such as the severity and consistency of the slippage across the fleet **1.**

In some examples, the fleet control is an operational halt, which can be done when the second slippage condition indicates persistent and more severe slippage of at least one tire **5** of the material handling machine **10** on the road portion **24.** This scenario suggests that the traction issue is more critical and poses more severe safety risks. In response to such severe slippage, the processing circuitry **102** is configured to halt operations of the fleet **1** entirely. This drastic measure is essential to prevent accidents and equipment damage, ensuring the safety of both the machines **10** and their operators. Halting operations allows for an assessment of the conditions and the effectiveness of previously applied friction-enhancing measures. It provides an opportunity to re-evaluate the situation, possibly apply additional corrective actions, or wait for improved environmental conditions.

In some examples, the fleet control is a friction value increase, which can be done when the second slippage condition indicates that at least one tire **5** of the material handling machine **10** continues to experience slippage on the road portion **24.** The processing circuitry **102** is configured to increase the current friction value of at least one tire **5** of the affected machine **10.** The friction value is a quantitative measure representing the coefficient of friction between the tires **5** of a machine **10** and the ground **22** on which it operates. This value indicates the level of grip or resistance to slipping experienced by the tires **5.** To increase this friction value, one or more of the following can be performed.

The friction value may be increased by performing a suspension setting adjustment to improve weight distribution and contact pressure on the tires **5.** By altering the suspension settings, the processing circuitry **102** can ensure that the tires **5** maintain better contact with the ground **22,** enhancing traction. The friction value may be increased by regulating a torque distribution, which involves adjusting how power is distributed between the tries **5** or axles. By balancing the torque, the processing circuitry **102** can prevent excessive force on any single tire **5,** reducing the risk of slippage. The friction value may be increased by performing a throttle input adjustment. This involves modulating the power delivery to the tires **5.** By carefully controlling the throttle, the processing circuitry **102** can reduce wheel spin and improve tire grip on the ground **22.**

In some examples, the fleet control is a reapplication of friction-enhancing material, which can be done when the second slippage condition indicates that at least one tire **5** continues to experience slippage on the road portion **24.** The processing circuitry **102** responds by controlling a reapplication of the friction-enhancing material on the same location. This approach acknowledges that the initial application may not have sufficiently improved traction. By applying additional friction-enhancing material, the processing circuitry **102** aims to further increase the grip between the tires **5** and the ground **22.** This can involve increasing the quantity of material used or altering the type of material to better suit the specific conditions.

In some examples, the fleet control is a travelling maneuver. The travelling maneuver may include performing a direction reversal, which can be done when the second slippage condition indicates that at least one tire **5** continues to experience slippage on the road portion **24.** The processing circuitry **102** is configured to control the fleet **1** to reverse its traveling direction in the work cycle **26.** This decision is made to navigate away from the problematic area and potentially approach it from a different angle. Reversing direction allows the fleet **1** to avoid the section where traction is compromised, for example a challenging uphill, reducing the risk of accidents and operational delays. This maneuver can also provide an opportunity to reassess the conditions or apply additional measures, such as friction-enhancing materials, from a new approach. By changing the direction of travel, the processing circuitry **102** adapts the work cycle **26** to current conditions.

The traveling maneuver may alternatively be a travel to a location outside the work cycle **26,** which makes it possible to move machines **10** with for example faulty tires out of the way from the rest of the fleet **1.** This can be useful for security reasons, as faulty tires can lead to compromised traction and control, increasing the risk of accidents. By relocating these machines **10,** the fleet **1** can continue operating safely and efficiently to reduce disruptions and maintain operational integrity.

In some examples, the fleet control is a work cycle adaptation, which can be done when the second slippage condition indicates ongoing slippage of at least one tire **5** on the road portion **24.** This involves modifying the sequence or timing of operations to address the traction issue. These adaptations can include omitting a problematic road portion **24** from the work cycle, thereby avoiding areas with poor traction altogether. Additionally or alternatively, the adaptation can include adding a new road portion **24** that offers better conditions, rerouting the fleet **1** to ensure safer and more efficient operations. Additionally or alternatively, the adaptation can include changing an existing road portion **24,** such as altering the path or improving the surface to enhance traction.

In some examples, the fleet control is a topography data-based control action. In these examples the processing circuitry **102** is further configured to obtain topography data of the work cycle **26,** which provides detailed information about the terrain, including the inclinations of various road portions **24.** The topography data-based control involves adapting an operating pattern on road portions with different inclinations. For example, the processing circuitry **102** might adjust the speed, torque distribution, or throttle input of the machines when approaching steep inclines to ensure sufficient power and traction. Conversely, on declines, it may reduce speed and apply braking strategies to maintain control. By leveraging topography data, the system enhances the fleet's **1** ability to navigate terrain efficiently and safely.

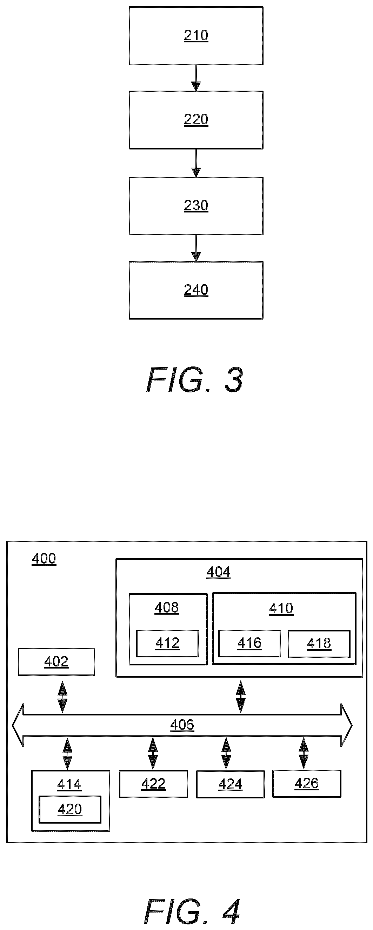

**FIG. 3** is a flowchart of a method **200** for controlling a fleet **1** of material handling machines **10** operating at a site **20** along a work cycle **26.** The steps of the method **200** is carried out by processing circuitry **102** of a computer system **100.** The method **200** comprises a step **210** of determining a first slippage condition of at least one material handling machine **10** in the fleet **1** operating at a road portion **24** of the work cycle **26.** The method **200** further comprises a step **220** of, in response to the first slippage condition indicating that at least one tire **5** of the at least one material handling machine **10** experiences slippage against the road portion **24,** control an application of a friction-enhancing material on said road portion **24.** The method **200** further comprises a step **230** of determining a second slippage condition of the same at least one material handling machine **10** operating at the same road portion **24** after said friction-enhancing material being applied thereto. The method **200** further comprises a step **240** of controlling the fleet **1** based on the second slippage condition.

**FIG. 4** is a schematic diagram of a computer system **400** for implementing examples disclosed herein. The computer system **400** is adapted to execute instructions from a computer-readable medium to perform these and/or any of the functions or processing described herein. The computer system **400** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **400** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **400** may comprise at least one computing device or electronic device capable of including firmware, hardware, and/or executing software instructions to implement the functionality described herein. The computer system **400** may include processing circuitry **402** (e.g., processing circuitry including one or more processor devices or control units), a memory **404,** and a system bus **406.** The computer system **400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., random-access memory (RAM)), or any other medium which can be used to carry or store desired program code in the form of machine-executable instructions or data structures and which can be accessed by a computer or other machine with processing circuitry **402.** A basic input/output system (BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program **420** stored on a transitory or non-transitory computer-usable or computer-readable storage medium (e.g., single medium or multiple media), such as the storage device **414,** which includes complex programming instructions (e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402.** In some examples, the storage device **414** may be a computer program product (e.g., readable storage medium) storing the computer program **420** thereon, where at least a portion of a computer program **420** may be loadable (e.g., into a processor) for implementing the functionality of the examples described herein when executed by the processing circuitry **402.** The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device
interface **422** coupled to the system bus **406** but can be connected through other interfaces, such as a parallel port, an Institute of Electrical and Electronic Engineers (IEEE) 1394 serial port, a Universal Serial Bus (USB) port, an IR interface, and the like. The computer system **400** may include an output device interface **424** configured to forward output, such as to a display, a video display unit (e.g., a liquid crystal display (LCD) or a cathode ray tube (CRT)). The computer system **400** may include a communications interface **426** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system (100; 400) for controlling a fleet (1) of material handling machines (10) operating at a site (20) along a work cycle (26), the computer system (100; 400) comprises processing circuitry (102; 402) configured to determine a first slippage condition of at least one material handling machine (10) in the fleet (1) operating at a road portion (24) of the work cycle (26). In response to the first slippage condition indicating that at least one tire (5) of the at least one material handling machine (10) experiences slippage against the road portion (24), it controls an application of a friction-enhancing material on said road portion (24). It determines a second slippage condition of the same at least one material handling machine (10) operating at the same road portion (24) after said friction-enhancing material being applied thereto and controls the fleet (1) based on the second slippage condition.

Example 2: The computer system (100; 400) of Example 1, wherein in response to the second slippage condition indicating that at least one tire (5) of the at least one material handling machine (10) no longer experiences slippage against the road portion (24), the processing circuitry (102; 402) is configured to control the fleet (1) to increase a current travelling speed.

Example 3: The computer system (100; 400) of any preceding example, wherein in response to the second slippage condition indicating that at least one tire (5) of the at least one material handling machine (10) experiences slippage against the road portion (24), the processing circuitry (102; 402) is configured to control the fleet (1) to reduce a current travelling speed.

Example 4: The computer system (100; 400) of Example 3, wherein the processing circuitry (102; 402) is further configured to control the fleet (1) to halt operations.

Example 5: The computer system (100; 400) of any preceding example, wherein in response to the second slippage condition indicating that at least one tire (5) of the at least one material handling machine (10) experiences slippage against the road portion (24), the processing circuitry (102; 402) is configured to control the fleet (1) by increasing a current friction value of at least one tire (5) of said at least one material handling machine (10).

Example 6: The computer system (100; 400) of Example 5, wherein the processing circuitry (102; 402) is configured to increase the current friction value by controlling said at least one material handling machine (10) to perform a suspension setting adjustment.

Example 7: The computer system (100; 400) of Example 5 or 6, wherein the processing circuitry (102; 402) is configured to increase the current friction value by controlling said at least one material handling machine (10) to perform a torque distribution regulation.

Example 8: The computer system (100; 400) of any preceding example, wherein in response to the second slippage condition indicating that at least one tire (5) of the at least one material handling machine (10) experiences slippage against the road portion (24), the processing circuitry (102; 402) is configured to control the fleet (1) by controlling a reapplication of the friction-enhancing material on the same road portion (24).

Example 9: The computer system (100; 400) of any preceding example, wherein in response to the second slippage condition indicating that at least one tire (5) of the at least one material handling machine (10) experiences slippage against the road portion (24), the processing circuitry (102; 402) is configured to control the fleet (1) by instructing said at least one material handling machine (10) to travel to a location outside the work cycle (26).

Example 10: The computer system (100; 400) of any preceding example, wherein in response to the second slippage condition indicating that at least one tire (5) of the at least one material handling machine (10) experiences slippage against the road portion (24), the processing circuitry (102; 402) is configured to control the fleet (1) to reverse its travelling direction in the work cycle (26).

Example 11: The computer system (100; 400) of any preceding example, wherein in response to the second slippage condition indicating that at least one tire (5) of the at least one material handling machine (10) experiences slippage against the road portion (24), the processing circuitry (102; 402) is configured to control the fleet (1) by adapting the work cycle (26).

Example 12: The computer system (100; 400) of Example 11, wherein adapting the work cycle (26) comprises one or more of omitting a road portion (24) from the work cycle (26), including a road portion (24) to the work cycle (26), and making changes to an existing road portion (24) of the work cycle (26).

Example 13: The computer system (100; 400) of any preceding example, wherein the processing circuitry (102; 402) is further configured to obtain topography data of the work cycle (26) and control the fleet (1) based on the topography data, said topography data-based control comprising a specific operating pattern while the fleet (1) is operating at road portions (24) associated with different inclinations.

Example 14: The computer system (100; 400) of any preceding example, wherein the processing circuitry (102; 402) is configured to control the application of the friction-enhancing material by controlling a friction fighting system (30) mounted to one or more of the material handling machines (10).

Example 15: The computer system (100; 400) of any preceding example, wherein the processing circuitry (102; 402) is configured to control the application of the friction-enhancing material by controlling a friction fighting system (30) mounted to a friction fighting machine (12) operating with the fleet (1) or independently of the fleet (1).

Example 16: The computer system (100; 400) of any preceding example, being arranged in one of the material handling machines (10).

Example 17: The computer system (100; 400) of any of Examples 1-15, wherein the processing circuitry (102; 402) comprises first processing circuitry arranged in a first material handling machine (10-1) and second processing circuitry arranged in a second material handling machine (10-2), wherein the first and second processing circuitry (102-1, 102-2) are configured to communicate indications to one another in response to one or more of the following actions being carried out: (i) slippage condition determination, (ii) friction-enhancing material application control, and (iii) fleet control.

Example 18: The computer system (100; 400) of any preceding example, wherein the processing circuitry (102; 402) is configured to determine the first and second slippage conditions by controlling said at least one material handling machine (10) to drive both its steering axles while allowing a first axle to freewheel and applying a negative torque to the first axle to identify a point at which slippage occurs.

Example 19: The computer system (100; 400) of any preceding example, wherein processing circuitry (102; 402) is configured to perform the determination of the first slippage condition in response to one or more of a detection of a change in weather conditions based on obtained environmental data, a predetermined timing schedule indicating that the determination is due, an introduction of an additional material handling machine (10) in the fleet (1), a removal of an existing material handling machine (10) from the fleet (1), and after the termination of an operational halt of the fleet (1) at the work cycle (26).

Example 20: A material handling machine (10) comprising the computer system (100; 400) of any of Examples 1-19.

Example 21: A fleet (1) comprising a plurality of material handling machines (10) according to Example 20.

Example 22: A computer-implemented method (200) for controlling a fleet (1) of material handling machines (10) operating at a site (20) along a work cycle (26), the method (200) comprises determining (210), by processing circuitry (102; 402) of a computer system (100; 400), a first slippage condition of at least one material handling machine (10) in the fleet (1) operating at a road portion (24) of the work cycle (26). In response to the first slippage condition indicating that at least one tire (5) of the at least one material handling machine (10) experiences slippage against the road portion (24), controlling (220), by the processing circuitry (102; 402), an application of a friction-enhancing material on said road portion (24). Determining (230), by the processing circuitry (102; 402), a second slippage condition of the same at least one material handling machine (10) operating at the same road portion (24) after said friction-enhancing material being applied thereto and controlling (240), by the processing circuitry (102; 402), the fleet (1) based on the second slippage condition.

Example 23: A computer program product comprising program code for performing, when executed by the processing circuitry (102; 402), the method (200) of Example 22.

Example 24: A non-transitory computer-readable storage medium comprising instructions, which when executed by the processing circuitry (102; 402), cause the processing circuitry (102; 402) to perform the method (200) of Example 22.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (100; 400) for controlling a fleet (1) of material handling machines (10) operating at a site (20) along a work cycle (26), the computer system (100; 400) comprising processing circuitry (102; 402) configured to:
determine a first slippage condition of at least one material handling machine (10) in the fleet (1) operating at a road portion (24) of the work cycle (26);
in response to the first slippage condition indicating that at least one tire (5) of the at least one material handling machine (10) experiences slippage against the road portion (24), control an application of a friction-enhancing material on said road portion (24);
determine a second slippage condition of the same at least one material handling machine (10) operating at the same road portion (24) after said friction-enhancing material being applied thereto; and
control the fleet (1) based on the second slippage condition.

2. The computer system (100; 400) of claim 1, wherein in response to the second slippage condition indicating that at least one tire (5) of the at least one material handling machine (10) no longer experiences slippage against the road portion (24), the processing circuitry (102; 402) is configured to control the fleet (1) to increase a current travelling speed.

3. The computer system (100; 400) of any preceding claim, wherein in response to the second slippage condition indicating that at least one tire (5) of the at least one material handling machine (10) experiences slippage against the road portion (24), the processing circuitry (102; 402) is configured to control the fleet (1) to reduce a current travelling speed, or halt operations.

4. The computer system (100; 400) of any preceding claim, wherein in response to the second slippage condition indicating that at least one tire (5) of the at least one material handling machine (10) experiences slippage against the road portion (24), the processing circuitry (102; 402) is configured to control the fleet (1) by increasing a current friction value of at least one tire (5) of said at least one material handling machine (10), wherein increasing the current friction value comprising performing one or more of:
a suspension setting adjustment, and
a torque distribution regulation.

5. The computer system (100; 400) of any preceding claim, wherein in response to the second slippage condition indicating that at least one tire (5) of the at least one material handling machine (10) experiences slippage against the road portion (24), the processing circuitry (102; 402) is configured to control the fleet (1) by controlling a reapplication of the friction-enhancing material on the same road portion (24).

6. The computer system (100; 400) of any preceding claim, wherein in response to the second slippage condition indicating that at least one tire (5) of the at least one material handling machine (10) experiences slippage against the road portion (24), the processing circuitry (102; 402) is configured to control the fleet (1) by causing it to perform a travelling maneuver, the travelling maneuver comprising one or more of:
a travel to a location outside the work cycle (26), and
a reversal of a travelling direction in the work cycle (26).

7. The computer system (100; 400) of any preceding claim, wherein in response to the second slippage condition indicating that at least one tire (5) of the at least one material handling machine (10) experiences slippage against the road portion (24), the processing circuitry (102; 402) is configured to control the fleet (1) by adapting the work cycle (26), comprising one or more of:
omitting a road portion (24) from the work cycle (26),
including a road portion (24) to the work cycle (26), and
making changes to an existing road portion (24) of the work cycle (26).

8. The computer system (100; 400) of any preceding claim, wherein the processing circuitry (102; 402) is further configured to:
obtain topography data of the work cycle (26); and
control the fleet (1) based on the topography data, said topography data-based control comprising a specific operating pattern while the fleet (1) is operating at road portions (24) associated with different inclinations.

9. The computer system (100; 400) of any preceding claim, wherein the processing circuitry (102; 402) is configured to control the application of the friction-enhancing material by one or more of:
controlling a friction fighting system (30) mounted to one or more of the material handling machines (10), and
controlling a friction fighting system (30) mounted to a friction fighting machine (12) operating with the fleet (1) or independently of the fleet (1).

10. The computer system (100; 400) of any preceding claim, wherein the processing circuitry (102; 402) is configured to determine the first and second slippage conditions by:
controlling said at least one material handling machine (10) to drive both its steering axles while allowing a first axle to freewheel; and
applying a negative torque to the first axle to identify a point at which slippage occurs.

11. A material handling machine (10) comprising the computer system (100; 400) of any of claims 1-10.

12. A fleet (1) comprising a plurality of material handling machines (10) according to claim 11.

13. A computer-implemented method (200) for controlling a fleet (1) of material handling machines (10) operating at a site (20) along a work cycle (26), the method (200) comprising:
determining (210), by processing circuitry (102; 402) of a computer system (100; 400), a first slippage condition of at least one material handling machine (10) in the fleet (1) operating at a road portion (24) of the work cycle (26);
in response to the first slippage condition indicating that at least one tire (5) of the at least one material handling machine (10) experiences slippage against the road portion (24), controlling (220), by the processing circuitry (102; 402), an application of a friction-enhancing material on said road portion (24);
determining (230), by the processing circuitry (102; 402), a second slippage condition of the same at least one material handling machine (10) operating at the same road portion (24) after said friction-enhancing material being applied thereto; and
controlling (240), by the processing circuitry (102; 402), the fleet (1) based on the second slippage condition.

14. A computer program product comprising program code for performing, when executed by the processing circuitry (102; 402), the method (200) of claim 13.

15. A non-transitory computer-readable storage medium comprising instructions, which when executed by the processing circuitry (102; 402), cause the processing circuitry (102; 402) to perform the method (200) of claim 13.

## Amended claims

### Amended claims in accordance with Rule 137(2) EPC.

1. A computer system (100; 400) for controlling a fleet (1) of material handling machines (10) operating at a site (20) along a work cycle (26), the computer system (100; 400) comprising processing circuitry (102; 402) configured to:
determine a first slippage condition of at least one material handling machine (10) in the fleet (1) operating at a road portion (24) of the work cycle (26);
in response to the first slippage condition indicating that at least one tire (5) of the at least one material handling machine (10) experiences slippage against the road portion (24), control an application of a friction-enhancing material on said road portion (24);
determine a second slippage condition of the same at least one material handling machine (10) operating at the same road portion (24) after said friction-enhancing material being applied thereto; and
control the fleet (1) based on the second slippage condition,
wherein in response to the second slippage condition indicating that at least one tire (5) of the at least one material handling machine (10) no longer experiences slippage against the road portion (24), the processing circuitry (102; 402) is configured to control the fleet (1) by increasing a current travelling speed to increase productivity and
wherein in response to the second slippage condition indicating that at least one tire (5) of the at least one material handling machine (10) experiences slippage against the road portion (24), the processing circuitry (102; 402) is configured to control the fleet (1) by reducing the current travelling speed, or halt operations.

2. The computer system (100; 400) of claim 1, wherein in response to the second slippage condition indicating that at least one tire (5) of the at least one material handling machine (10) experiences slippage against the road portion (24), the processing circuitry (102; 402) is configured to control the fleet (1) by increasing a current friction value of at least one tire (5) of said at least one material handling machine (10), wherein increasing the current friction value comprising performing one or more of:
a suspension setting adjustment, and
a torque distribution regulation.

3. The computer system (100; 400) of any preceding claim, wherein in response to the second slippage condition indicating that at least one tire (5) of the at least one material handling machine (10) experiences slippage against the road portion (24), the processing circuitry (102; 402) is configured to control the fleet (1) by controlling a reapplication of the friction-enhancing material on the same road portion (24).

4. The computer system (100; 400) of any preceding claim, wherein in response to the second slippage condition indicating that at least one tire (5) of the at least one material handling machine (10) experiences slippage against the road portion (24), the processing circuitry (102; 402) is configured to control the fleet (1) by causing it to perform a travelling maneuver, the travelling maneuver comprising one or more of:
a travel to a location outside the work cycle (26), and
a reversal of a travelling direction in the work cycle (26).

5. The computer system (100; 400) of any preceding claim, wherein in response to the second slippage condition indicating that at least one tire (5) of the at least one material handling machine (10) experiences slippage against the road portion (24), the processing circuitry (102; 402) is configured to control the fleet (1) by adapting the work cycle (26), comprising one or more of:
omitting a road portion (24) from the work cycle (26),
including a road portion (24) to the work cycle (26), and
making changes to an existing road portion (24) of the work cycle (26).

6. The computer system (100; 400) of any preceding claim, wherein the processing circuitry (102; 402) is further configured to:
obtain topography data of the work cycle (26); and
control the fleet (1) based on the topography data, said topography data-based control comprising a specific operating pattern while the fleet (1) is operating at road portions (24) associated with different inclinations.

7. The computer system (100; 400) of any preceding claim, wherein the processing circuitry (102; 402) is configured to control the application of the friction-enhancing material by one or more of:
controlling a friction fighting system (30) mounted to one or more of the material handling machines (10), and
controlling a friction fighting system (30) mounted to a friction fighting machine (12) operating with the fleet (1) or independently of the fleet (1).

8. The computer system (100; 400) of any preceding claim, wherein the processing circuitry (102; 402) is configured to determine the first and second slippage conditions by:
controlling said at least one material handling machine (10) to drive both its steering axles while allowing a first axle to freewheel; and
applying a negative torque to the first axle to identify a point at which slippage occurs.

9. A material handling machine (10) comprising the computer system (100; 400) of any of claims 1-8.

10. A fleet (1) comprising a plurality of material handling machines (10) according to claim 9.

11. A computer-implemented method (200) for controlling a fleet (1) of material handling machines (10) operating at a site (20) along a work cycle (26), the method (200) comprising:
determining (210), by processing circuitry (102; 402) of a computer system (100; 400), a first slippage condition of at least one material handling machine (10) in the fleet (1) operating at a road portion (24) of the work cycle (26);
in response to the first slippage condition indicating that at least one tire (5) of the at least one material handling machine (10) experiences slippage against the road portion (24), controlling (220), by the processing circuitry (102; 402), an application of a friction-enhancing material on said road portion (24);
determining (230), by the processing circuitry (102; 402), a second slippage condition of the same at least one material handling machine (10) operating at the same road portion (24) after said friction-enhancing material being applied thereto; and
controlling (240), by the processing circuitry (102; 402), the fleet (1) based on the second slippage condition, wherein in response to the second slippage condition indicating that at least one tire (5) of the at least one material handling machine (10) no longer experiences slippage against the road portion (24), controlling of the fleet (1) comprises increasing a current travelling speed to increase productivity, and
wherein in response to the second slippage condition indicating that at least one tire (5) of the at least one material handling machine (10) experiences slippage against the road portion (24), controlling of the fleet (1) comprises reducing the current travelling speed, or halt operations.

12. A computer program product comprising program code for performing, when executed by the processing circuitry (102; 402), the method (200) of claim 11.

13. A non-transitory computer-readable storage medium comprising instructions, which when executed by the processing circuitry (102; 402), cause the processing circuitry (102; 402) to perform the method (200) of claim 11.
